# FASCICULE DE BREVET EUROPEEN

(11) **EP 1 749 381 B1**
(45) Date de publication et mention de la délivrance du brevet: **19.12.2007**
(21) Numéro de dépôt: 05762563.4
(22) Date de dépôt: 13.05.2005
(51) Int. Cl.: H04L 12/56

(54) **ROUTEUR INTER-DOMAINES A MODULE DE DETERMINATION D'AGREGATION DE ROUTES**
INTER-DOMAIN-ROUTER MIT MODUL ZUR BESTIMMUNG DER ROUTENAGGREGATION
INTER-DOMAIN ROUTER COMPRISING A MODULE FOR DETERMINING ROUTE AGGREGATION

(30) Priorité: 14.05.2004 FR 0405239
(43) Date de publication de la demande: 07.02.2007
(73) Titulaire: Alcatel Lucent, 75008 Paris (FR)
(72) Inventeur: LEVY, Thomas, F-75013 PARIS (FR); MARCE, Olivier, F-91300 MASSY (FR)
(74) Mandataire: Sciaux, Edmond
(86) Numéro de dépôt international: PCT/FR2005/050325
(87) Numéro de publication internationale: WO 2005/114923

(56) Documents cités:
- EP-A- 1 331 793
- WO-A-03/007556
- GB-A- 2 320 159
- US-B1- 6 401 130

## Description

L'invention concerne le domaine des routeurs inter-domaines des réseaux de communications à protocole Internet (ou IP), et plus précisément l'agrégation de routes au sein de tels routeurs.

On entend ici par « route » des données d'information permettant d'acheminer un datagramme IP vers un noeud suivant d'un réseau. Ces données d'information comportent généralement plusieurs attributs, comme par exemple celui appelé « préfixe », décrivant un ensemble d'adresses IP contiguës, ou ceux appelés « AS_Path » et « next_hop ».

Comme le sait l'homme de l'art, un réseau IP est un contexte multidomaines constitué d'une somme de domaines et/ou de sous-domaines IP raccordés les uns aux autres au moyen d'équipements d'accès formant des noeuds, tels que des routeurs inter-domaines.

Certains routeurs inter-domaines, comme par exemple ceux de type BGP (pour « Border Gateway Protocol »), peuvent être configurés afin de permettre l'agrégation de plusieurs routes.

La configuration consiste à fournir à un routeur inter-domaines des préfixes d'agrégats de routes (ou routes agrégées) afin qu'il les utilise lors de ses opérations de routage. Ces préfixes sont tout d'abord déterminés par l'opérateur du réseau grâce, principalement, à sa connaissance de la topologie inter-domaines et/ou d'une politique d'allocation de préfixes et/ou des données de routage contenues dans des tables de routage, puis ils sont saisis manuellement ou générés par une méthode de type « copier-coller » avant d'être transmis aux routeurs concernés.

Dans la pratique, la détermination des préfixes d'agrégats de routes s'avère complexe, notamment du fait que l'opérateur d'un réseau n'a en général qu'une connaissance partielle de la topologie inter-domaines (en fait il ne connaît généralement que la topologie de son propre domaine, également appelé « système autonome » (ou AS pour « Autonomous System ») et les topologies des domaines de ses clients. L'analyse des données de routage, contenues dans les tables de routage, permet certes d'élargir le champ d'investigation des agrégations. Mais le nombre très important de routes (typiquement 100000), définies par les données de routage stockées dans chaque routeur inter-domaines, et l'évolution fréquente des routes, rendent les déterminations de préfixes d'agrégats de routes complexes et coûteuses.

En outre, les préfixes d'agrégations de routes étant saisis ou générés de façon complètement manuelle, ils sont fréquemment erronés, ce qui nuit à l'acheminement des datagrammes IP.

L'invention a donc pour but d'améliorer la situation, et notamment de réduire, voire supprimer, les erreurs de configuration des adresses d'agrégations de routes au sein des routeurs inter-domaines. US 6 401 130 divulgue aussi l'agrégation automatique des routes.

Elle propose à cet effet un routeur inter-domaines, pour un réseau IP, comprenant des moyens de traitement chargés de générer, en fonction de données de routage, des messages sortant destinés à d'autres routeurs et comprenant des données d'information représentatives de routes pour l'acheminement de datagrammes IP.

Ce routeur, qui est par exemple de type BGP, se caractérise par le fait qu'il comprend en outre des moyens de contrôle chargés d'analyser certaines au moins des données de routage afin de définir des agrégats de routes en fonction d'informations de configuration choisies et de délivrer des données de sortie, représentatives de ces agrégats de routes, afin que les moyens de traitement puissent générer des messages sortant comportant des données d'information représentatives desdits agrégats de route.

Préférentiellement les données de sortie sont des préfixes agrégés.

Les moyens de contrôle peuvent être éventuellement agencés de manière à délivrer leurs données de sortie de façon groupée lorsqu'ils ont défini un nombre d'agrégats de routes supérieur ou égal à un nombre choisi.

Par ailleurs, le routeur comprend préférentiellement des moyens de configuration alimentés en données de sortie par les moyens de contrôle et chargés de générer des messages de configuration représentatifs des données de sortie qu'ils reçoivent et destinés aux moyens de traitement, afin qu'ils génèrent les messages sortant correspondant. Dans ce cas, les moyens de configuration sont par exemple agencés de manière à ne générer un message de configuration que lorsqu'ils reçoivent une requête externe.

En outre, le routeur peut être agencé de manière à adresser les données de sortie, délivrées par ses moyens de contrôle, à un équipement de gestion du réseau. Dans ce cas, la requête externe servant à déclencher la génération d'un message de configuration provient préférentiellement de l'équipement de gestion du réseau.

Avantageusement, lorsque les données de routage définissant une route comportent des attributs de types différents, ce qui est généralement le cas, les moyens de contrôle sont préférentiellement agencés pour comparer entre eux les attributs d'un même type choisi, au moins, qui définissent des routes différentes, et pour considérer comme pouvant être agrégées des routes présentant des attributs comparables (ou communs) de chaque type choisi. Les informations de configuration choisies définissent alors chaque type d'attribut objet d'une comparaison.

Dans ce cas, les moyens de contrôle sont avantageusement chargés de comparer entre eux au moins les attributs appelés préfixes, deux préfixes étant alors considérés comme comparables (ou communs) lorsque l'un englobe l'autre ou lorsqu'ils sont voisins et de même dimension (c'est-à-dire lorsque la réunion des deux préfixes forme un préfixe de plus grande taille).

Enfin, les données de routage, objet de l'analyse, sont préférentiellement stockées dans une table de routage du routeur, laquelle est avantageusement mise à jour par les moyens de traitement au moyen des données d'information contenues dans les messages entrant qu'ils reçoivent des autres routeurs.

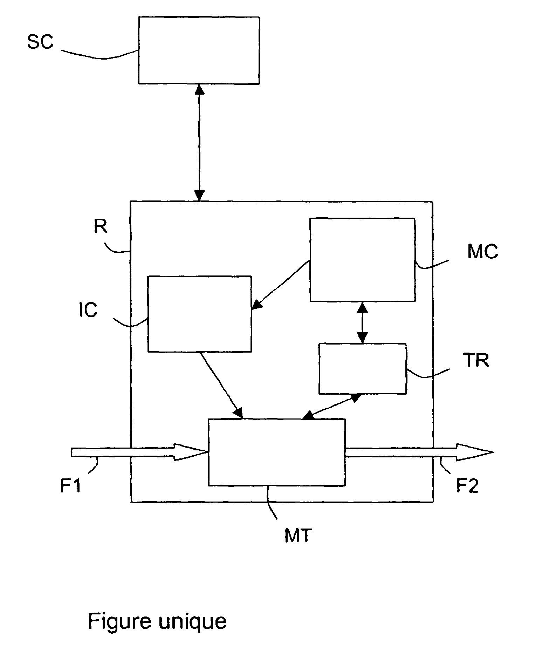

D'autres caractéristiques et avantages de l'invention apparaîtront à l'examen de la description détaillée ci-après, et du dessin annexé, sur lequel l'unique figure illustre de façon schématique un exemple de réalisation d'un routeur inter-domaines selon l'invention, couplé à un terminal de configuration d'un opérateur de réseau. Le dessin annexé pourra non seulement servir à compléter l'invention, mais aussi contribuer à sa définition, le cas échéant.

L'invention a pour objet de permettre une détermination automatisée d'agrégations de routes dans un routeur inter-interdomaines d'un réseau de communications à protocole Internet (ou IP).

Dans la description qui suit on considère, à titre d'exemple illustratif, que le routeur inter-interdomaines est de type BGP (pour « Border Gateway Protocol »). On entend ici par « routeur BGP » un routeur utilisant un protocole de type BGP lui permettant d'échanger des informations de routage, dites externes, avec un autre routeur BGP, appartenant soit au même domaine IP (ou système autonome (AS)) que le sien, soit à un autre domaine IP que le sien.

Comme cela est illustré schématiquement, et de façon fonctionnelle, sur l'unique figure, un routeur R, selon l'invention, comporte tout d'abord une table de routage TR dans laquelle sont stockées des données de routage lui permettant de router des datagrammes IP vers un routeur suivant.

Le routeur R comporte également un module de traitement MT couplé à la table de routage TR et chargé, d'une première part, de recevoir des messages entrant (matérialisés par la flèche F1) provenant des routeurs BGP auxquels son routeur R est raccordé et comportant des données d'information représentatives de routes pour l'acheminement de datagrammes IP, d'une deuxième part, de mettre à jour la table de routage TR avec les données d'information contenues dans les messages entrant reçus, et d'une troisième part, de générer, en fonction des données de routage stockées dans la table de routage TR, des messages sortant (matérialisés par la flèche F2) comprenant également des données d'information représentatives de routes pour l'acheminement de datagrammes IP et destinés aux routeurs BGP raccordés à son routeur R.

Généralement, les données d'informations comportent plusieurs attributs comme par exemple celui appelé « préfixe », décrivant un ensemble d'adresses IP contiguës, et ceux appelés « AS_Path » et « next_hop ».

Grâce à ces messages entrant et sortant, les données d'information définissant les routes peuvent se propager d'un routeur BGP à un autre routeur BGP. Cela permet d'alimenter leurs tables de routage TR en données de routage actualisées. Il est rappelé qu'une table de routage TR d'un routeur BGP comporte généralement des données de routage correspondant à 100000 « préfixes » différents.

Le routeur R comprend en outre une interface de configuration IC, couplée au module de traitement MT et alimentée en données de configuration par l'opérateur du réseau auquel son routeur appartient, via un terminal SC. Ces données de configuration sont appliquées, une fois transformées par l'interface de configuration IC, au module de traitement MT afin d'affecter le traitement de messages entrants, de la table de routage et de messages sortants.

Selon l'invention, le routeur R comprend également un module de contrôle MC chargé tout d'abord d'analyser certaines au moins des données de routage, qui sont stockées dans la table de routage TR, afin de définir des agrégats de routes en fonction d'informations de configuration choisies.

Il est important de noter que le module de configuration MC peut être configuré de manière à analyser toutes les données de routage stockées dans la table de routage TR de son routeur R, ou bien seulement une sélection d'entre elles (par exemple par échantillonnage).

Lorsque les données de routage, qui définissent une route dans la table de routage TR, comportent des attributs de types différents, ce qui est généralement le cas, leur analyse par le module de contrôle MC consiste à comparer entre eux les attributs qui définissent des routes différentes. La comparaison peut porter sur un unique type d'attribut ou bien sur plusieurs (selon les informations de configuration choisies qui définissent chaque type d'attribut devant faire l'objet d'une comparaison).

Lorsqu'il ressort d'une comparaison que des attributs de même(s) type(s), mais définissant des routes différentes, sont communs auxdites routes (ou comparables), alors ces routes sont considérées par le module de contrôle MC comme se recouvrant et peuvent faire l'objet d'une agrégation. Au moins deux routes peuvent être ainsi agrégées.

Préférentiellement, la comparaison porte au moins sur les attributs appelés préfixes. Dans ce cas deux préfixes sont considérés comme communs ou comparables lorsque l'un englobe l'autre ou lorsqu'ils sont voisins et de même dimension (c'est-à-dire lorsque la réunion des deux préfixes forme un préfixe de plus grande taille). Un premier préfixe englobe un second préfixe lorsque l'ensemble d'adresses constituant le second est indus dans l'ensemble d'adresses constituant le premier.

Lorsque le module de contrôle MC a défini une agrégation (ou un agrégat) de routes, il délivre des données de sortie représentatives de cette agrégation de routes.

Ces données de sortie sont préférentiellement des préfixes agrégés, mais, cela n'est pas obligatoire dès lors qu'elles sont représentatives d'une agrégation de routes. On entend ici par « préfixe agrégé » la réunion, au sens mathématique du terme, des préfixes communs (ou comparables) définissant des routes différentes. Par conséquent, en présence d'un premier préfixe englobant au moins un second préfixe, le préfixe agrégé est le premier préfixe ou, dans le cas de préfixes voisins, le préfixe issu de la réunion de ces préfixes.

Il est important de noter que le module de contrôle MC peut être configuré afin de délivrer ses données de sortie de façon groupée, c'est-à-dire une fois qu'il a défini un nombre d'agrégats de routes supérieur ou égal à un nombre choisi, par exemple égal à 10. Il comporte dans ce cas un compteur d'agrégats de routes qui est remis à zéro chaque fois qu'un groupe de données de sortie est délivré.

Les données de sortie délivrées par le module de contrôle MC sont destinées à permettre au module de traitement MT de générer des messages sortant comportant des données d'information représentatives des agrégats de route. En d'autres termes, les données de sortie permettent de configurer le routeur R, via son module de traitement MT, à l'aide de préfixes agrégés déterminés en interne par le module de contrôle MC.

De préférence, et comme illustré, le module de contrôle MC est couplé à l'interface de configuration IC afin de l'alimenter en données de sortie représentatives des agrégats de routes.

Dans ce cas, l'interface de configuration IC est agencée de manière à générer des messages de configuration, représentatifs des données de sortie qu'elle reçoit du module de contrôle MC, et à les communiquer au module de traitement MT afin qu'il génère des messages sortant définissant des routes agrégées, à destination des routeurs BGP voisins.

On peut envisager une variante dans laquelle le module de contrôle MC est directement couplé au module de traitement MT afin de l'alimenter en données de sortie.

L'intégration dans la table de routage TR des données de routage définissant un agrégat de routes (ou routes agrégées), défini par le module de contrôle MC, est préférentiellement effectuée par le module de traitement MT, lors de ses mises à jour.

Il est préférable, bien que non obligatoire, que les données de sortie ne soient communiquées au module de traitement MT d'un routeur R qu'après validation manuelle de l'opérateur du réseau. Pour ce faire, l'opérateur peut par exemple transmettre une requête de configuration (externe) à l'interface de configuration IC, via un terminal SC.

Le routeur R, et par exemple son interface de configuration IC, peut être agencé(e), de manière à transmettre à un terminal SC de l'opérateur du réseau, les données de sortie qui sont délivrées par son module de contrôle MC. Cette transmission peut se faire soit à l'initiative du module de contrôle MC, soit à l'initiative de l'interface de configuration IC, lorsqu'elle reçoit des données de sortie du module de contrôle MC, soit encore à l'initiative de l'opérateur. Ainsi, l'opérateur peut analyser les données de sortie affichées sur le moniteur de son terminal SC. Si l'opérateur estime que l'agrégation de routes qui lui est proposée est acceptable, il peut alors transmettre une requête de configuration (externe) à l'interface de configuration IC, via son terminal SC.

La requête de configuration (externe) contient préférentiellement la désignation des données de sortie, afin de permettre à l'interface de configuration IC de pouvoir les reconnaître parmi toutes celles qu'elle reçoit du module de contrôle MC. Cette requête de configuration est alors prise en compte par l'interface de configuration IC du routeur R concerné, laquelle génère un message de configuration à destination du module de traitement MT, comme indiqué précédemment.

Le module de traitement MT, le module de contrôle MC et l'interface de configuration IC d'un routeur inter-domaines R selon l'invention peuvent être réalisés sous la forme de circuits électroniques, de modules logiciels (ou informatiques), ou d'une combinaison de circuits et de logiciels.

L'invention ne se limite pas aux modes de réalisation de routeur inter-domaines décrits ci-avant, seulement à titre d'exemple, mais elle englobe toutes les variantes que pourra envisager l'homme de l'art dans le cadre des revendications ci-après.

## Revendications

1. Routeur inter-domaines (R), pour un réseau de communications à protocole Internet (IP), comprenant :
- des moyens de traitement (MT) agencés pour générer, en fonction de données de routage, des messages sortant destinés à d'autres routeurs et comprenant des données d'information représentatives de routes pour l'acheminement de datagrammes IP,
- des moyens de contrôle (MC) agencés pour analyser certaines au moins desdites données de routage de manière à définir des agrégats de routes en fonction d'informations de configuration choisies et à délivrer des données de sortie, représentatives desdits agrégats de routes, en vue de la génération par lesdits moyens de traitement (MT) de messages sortant comportant des données d'information représentatives desdits agrégats de routes. ;
**caractérisé en ce que** lesdites données de routage, définissant une route, comportant des attributs de types différents, lesdits moyens de contrôle (MC) sont agencés pour comparer entre eux au moins des attributs d'un même type choisi définissant des routes différentes, et pour considérer comme pouvant être agrégées des routes présentant des attributs comparables de chaque type choisi, lesdites informations de configuration choisies définissant chaque type d'attribut objet de ladite comparaison.

2. Routeur selon la revendication 1, **caractérisé en ce** lesdits moyens de contrôle (MC) sont agencés pour délivrer des données de sortie représentatives de préfixes agrégés.

3. Routeur selon la revendication 1, **caractérisé en ce que** lesdits moyens de contrôle (MC) sont agencés pour délivrer lesdites données de sortie de façon groupée lorsqu'ils ont défini un nombre d'agrégats de routes supérieur ou égal à un nombre choisi.

4. Routeur selon la revendication 1, **caractérisé en ce qu'**il comprend des moyens de configuration (IC) alimentés en données de sortie par lesdits moyens de contrôle (MC) et agencés pour générer des messages de configuration représentatifs de données de sortie reçues et destinés auxdits moyens de traitement (MT), de sorte qu'ils génèrent le message sortant correspondant.

5. Routeur selon la revendication 4, **caractérisé en ce que** lesdits moyens de configuration (IC) sont agencés pour générer un message de configuration à réception d'une requête externe.

6. Routeur selon la revendication 1, **caractérisé en ce qu'**il est agencé pour adresser lesdites données de sortie à un terminal (SC) auquel il est raccordé.

7. Routeur selon la combinaison des revendications 5 et 6, **caractérisé en ce que** ladite requête externe provient dudit terminal (SC).

8. Routeur selon la revendication 7, **caractérisé en ce que** lesdits moyens de contrôle (MC) sont agencés pour comparer entre eux au moins des attributs appelés préfixes décrivant un ensemble d'adresses contiguës, deux préfixes étant comparables soit lorsque l'un englobe l'autre soit lorsqu'ils sont voisins et de même dimension.

9. Routeur selon la revendication 1, **caractérisé en ce qu'**il comprend une table de routage (TR) dans laquelle sont stockées lesdites données de routage.

10. Routeur selon la revendication 9, **caractérisé en ce que** lesdites moyens de traitement (MT) sont agencés pour recevoir d'autres routeurs des messages entrant, comprenant des données d'information représentatives de routes pour l'acheminement de datagrammes IP, et pour mettre à jour ladite table de routage (TR) avec lesdites données d'information contenues dans les messages entrant reçus.

11. Routeur selon la revendication 1, **caractérisé en ce qu'**il est de type BGP.

## Claims

1. Inter-domain router (R), for an Internet Protocol (IP) communication network, comprising:
- processing means (MT) adapted to generate, as a function of routing data, outgoing messages addressed to other routers and comprising information data representative of routes for routing IP datagrams,
- control means (MC) adapted to analyze at least some of said routing data to define aggregates of routes as a function of chosen configuration information and to deliver output data representative of said route aggregates, with a view to the generation by said processing means (MT) of outgoing messages including information data representative of said route aggregates;
**characterized in that**, said routing data defining a route including attributes of different types, said control means (MC) are adapted to compare at least attributes of the same chosen type defining different routes with each other and to consider as suitable to be aggregated routes having comparable attributes of each chosen type, said chosen configuration information defining each type of attribute that is the subject of said comparison.

2. Router according to claim 1, **characterized in that** said control means (MC) are adapted to deliver output data representative of aggregated prefixes.

3. Router according to claim 1, **characterized in that** said control means (MC) are adapted to deliver said output data in a grouped fashion once they have defined a number of route aggregates greater than or equal to a chosen number.

4. Router according to claim 1, **characterized in that** it comprises configuration means (IC) fed with output data by said control means (MC) and adapted to generate configuration messages representative of output data received and addressed to said processing means (MT), so that they generate the corresponding outgoing message.

5. Router according to claim 4, **characterized in that** said configuration means (IC) are adapted to generate a configuration message on reception of an external request.

6. Router according to claim 1, **characterized in that** it is adapted to send said output data to a terminal (SC) to which it is connected.

7. Router according to the combination of claims 5 and 6, **characterized in that** said external request comes from said terminal (SC).

8. Router according to claim 7, **characterized in that** said control means (MC) are adapted to compare with each other at least attributes called prefixes describing a set of contiguous addresses, two prefixes being comparable either when one encompasses the other or when they are adjacent and of the same size.

9. Router according to claim 1, **characterized in that** it comprises a routing table (TR) in which said routing data is stored.

10. Router according to claim 9, **characterized in that** said processing means (MT) are adapted to receive from other routers incoming messages comprising information data representative of routes for routing IP datagrams and to update said routing table (TR) using said information data contained in the incoming messages received.

11. Router according to claim 1, **characterized in that** it is of the BGP type.

## Patentansprüche

1. Inter-Domain-Router (R) für ein Kommunikationsnetz mit Internet-Protokoll (IP), beinhaltend:
- Mittel zur Verarbeitung (MT), die so aufgebaut sind, dass sie abhängig von Routing-Daten abgehende Meldungen generieren, die für andere Router bestimmt sind und Informationsdaten einschließen, die für Routen für die Leitweglenkung von IP-Datagrammen stehen,
- Mittel zur Kontrolle (MC), die so aufgebaut sind, dass sie zumindest einige dieser Routing-Daten analysieren, so dass Routenaggregate in Abhängigkeit von gewählten Konfigurationsinformationen definiert werden und Ausgangsdaten generiert werden, die für diese Routenaggregate repräsentativ sind, im Hinblick auf die Generierung von abgehenden Meldungen, welche für diese Routenaggregate repräsentative Informationsdaten enthalten, durch diese Mittel zur Verarbeitung (MT);
**dadurch gekennzeichnet, dass** diese Routing-Daten, welche eine Route definieren, Attribute unterschiedlicher Art einschließen, wobei diese Mittel zur Kontrolle (MC) so aufgebaut sind, dass sie untereinander zumindest Attribute ein und desselben gewählten Typs vergleichen, welche verschiedene Routen definieren, und dass sie Routen, die vergleichbare Attribute jedes gewählten Typs aufweisen, als aggregierbare Routen betrachten, wobei diese gewählten Konfigurationsinformationen jeden Attributtyp festlegen, der Gegenstand dieses Vergleichs ist.

2. Router gemäß Anspruch 1, **dadurch gekennzeichnet, dass** diese Mittel zur Kontrolle (MC) so aufgebaut sind, dass sie repräsentative Ausgangsdaten von aggregierten Präfixen generieren.

3. Router gemäß Anspruch 1, **dadurch gekennzeichnet, dass** diese Mittel zur Kontrolle (MC) so aufgebaut sind, dass sie diese Ausgangsdaten gruppiert erstellen, wenn sie eine Anzahl von Routenaggregaten größer oder gleich einer gewählten Anzahl definiert haben.

4. Router gemäß Anspruch 1, **dadurch gekennzeichnet, dass** er Mittel zur Konfiguration (IC) einschließt, die durch diese Mittel zur Kontrolle (MC) mit Ausgangsdaten versorgt werden und so aufgebaut sind, dass Konfigurationsmeldungen generiert werden, die für empfangene Ausgangsdaten repräsentativ sind und für diese Mittel zur Verarbeitung (MT) bestimmt sind, so dass sie die entsprechende abgehende Meldung generieren.

5. Router gemäß Anspruch 4, **dadurch gekennzeichnet, dass** diese Mittel zur Konfiguration (IC) so aufgebaut sind, dass sie beim Empfang einer externen Anforderung eine Konfigurationsmeldung generieren.

6. Router gemäß Anspruch 1, **dadurch gekennzeichnet, dass** er so aufgebaut ist, dass er diese Ausgangsdaten an ein Endgerät (SC) adressiert, an das er angeschlossen ist.

7. Router gemäß Anspruch 5 und 6 in Kombination, **dadurch gekennzeichnet, dass** diese externe Anforderung von diesem Endgerät (SC) herkommt.

8. Router gemäß Anspruch 7, **dadurch gekennzeichnet, dass** diese Mittel zur Kontrolle (MC) so aufgebaut sind, dass sie untereinander zumindest Attribute mit der Bezeichnung Präfix vergleichen, die einen Komplex von benachbarten Adressen beschreiben, wobei zwei Präfixe vergleichbar sind, wenn entweder das eine das andere umfasst oder wenn sie benachbart und von gleichem Ausmaß sind.

9. Router gemäß Anspruch 1, **dadurch gekennzeichnet, dass** er eine Routing-Tabelle (TR) einschließt, in der diese Routing-Daten abgespeichert sind.

10. Router gemäß Anspruch 9, **dadurch gekennzeichnet, dass** diese Mittel zur Verarbeitung (MT) so aufgebaut sind, dass sie von anderen Routern eingehende Meldungen empfangen, die Informationsdaten einschließen, welche für Routen für die Leitweglenkung von IP-Datagrammen repräsentativ sind, und so aufgebaut sind, dass sie diese Routing-Tabelle (TR) mit diesen in den empfangenen eingehenden Meldungen enthaltenen Informationsdaten aktualisieren.

11. Router gemäß Anspruch 1, **dadurch gekennzeichnet, dass** er ein BGP-Router ist.
